# EUROPEAN PATENT SPECIFICATION

(11) **EP 3 076 057 B1**
(45) Date of publication and mention of the grant of the patent: **22.08.2018**
(21) Application number: 14866284.4
(22) Date of filing: 28.11.2014
(51) Int. Cl.: F16K 17/04, A47J 31/46

(54) **TWO-WAY PRESSURE RELIEF VALVE**
ZWEIWEGE-DRUCKENTLASTUNGSVENTIL
SOUPAPE DE SÉCURITÉ À DEUX VOIES

(30) Priority: 29.11.2013 CN 201310629001
(43) Date of publication of application: 05.10.2016
(73) Proprietor: Ningbo Seaver Electric Appliance Co., Ltd, Yuyao, Zhejiang 315400 (CN)
(72) Inventor: WANG, Tianping, Yuyao Zhejiang 315400 (CN)
(74) Representative: Knoop, Philipp
(86) International application number: PCT/CN2014/001060
(87) International publication number: WO 2015/078096

(56) References cited:
- CN-A- 102 486 237
- CN-A- 103 615 580
- CN-U- 201 651 423
- CN-U- 202 426 299
- CN-U- 202 801 286
- CN-U- 203 686 275
- IT-A1- MI20 062 401
- US-A- 4 355 653

## Description

### TECHNICAL FIELD

The present invention relates to a pressure relief device, and more particularly to a two-way pressure relief valve, which is especially applicable to be used in a water supply loop of a coffee machine.

### BACKGROUND ART

When a coffee machine or similar beverage brewing device is operated for brewing, a coffee capsule is brought into a brewing chamber. Water is pumped into a heating device by a water pump and is heated. The heated water flows through the coffee capsule in the brewing chamber, and coffee powder in the capsule is extracted to be brewed. The beverage after extraction flows out of a water outlet of the brewing chamber for people to drink. In order to achieve a better brewing effect, coffee machines perform the extraction process under high temperature and high pressure. As a result, a certain volume of hot water still remains inside the coffee machine after it finishes brewing coffee. If the handle is directly opened at this moment, it can be very dangerous for the user, since the hot water is prone to be splashed and lead to a scalding accident. In addition, some of the existing coffee machines are provided with a hydraulic brewing system, which is hydraulically driven for achieving the seal and lock of the brewing chamber, and the machine is still in the locked status with high temperature and high pressure inside after coffee brewing, at this moment, the machine cannot be opened.

In order to solve the above two technical problems, the manufacturers at present carry out a pressure relief for the coffee machine after brewing mostly by means of an electromagnetic valve. After the coffee machine finishes brewing coffee, the electromagnetic valve within the machine will be switched on in a program-controlled manner to empty the inside hot water under high temperature and high pressure, so as to solve the problems of hot water splashing and machine failing to be opened as mentioned above. However, the electromagnetic valve, as a relatively sophisticated electronic device, needs to be program-controlled additionally, therefore it involves higher cost and can be easily damaged. A two-way pressure relief valve according to the preamble of claim 1 is known from CN202801286U.

### SUMMARY OF THE INVENTION

The technical problem to be solved by the present invention is to provide a two-way pressure relief valve with respect to the above-mentioned prior art, which two-way pressure relief valve has a simple and reasonable structure and achieves a pressure relief making use of mechanical principles exclusively. This pressure relief valve brings about the advantages of low cost and being damage-insensitive.

The present invention solves the above-mentioned technical problem by means of the following technical solution: a two-way pressure relief valve, comprising a valve body having a valve cavity inside and a valve cartridge assembly disposed in the valve cavity;
wherein the valve body is provided at its top with a water inlet passage communicating with the valve cavity, and at its bottom with a pressure relief passage communicating with the valve cavity, while a water outlet passage communicating with the valve cavity is provided laterally in the valve body;
characterized in that the valve cartridge assembly comprises a cartridge body and a sealing member made of flexible material;
the cartridge body has a pressure chamber which is open upwards, wherein the cartridge body is slidable up and down in the valve cavity relative to the valve body, a downward displacement of the cartridge body enables it to fit an inlet end of the pressure relief passage in a sealing manner so as to block the pressure relief passage, a restoring means, which makes the cartridge body keep a tendency of an upward displacement to leave the inlet end of the pressure relief passage, is provided between the cartridge body and the valve body, and wherein side hole(s) for communicating the pressure chamber and the valve cavity is/are provided in the circumferential wall of the cartridge body;
the sealing member is arranged between the circumferential walls of the cartridge body and of the valve cavity, wherein the outer periphery of the upper part of the sealing member is in contact with the circumferential wall of the valve cavity so as to produce a seal, and the lower part of the sealing member covers the side hole(s);
and moreover, a space, available for the lower part of the sealing member to expand and deform radially outwards, is present between the outer periphery of the lower part of the sealing member and the outer circumferential wall of the valve cavity.

Preferably, the restoring means can be embodied as a spring or an elastic rubber, the two ends of which are supported respectively between the outer wall of the cartridge body and the inner wall and the valve body.

Optionally, the valve body is composed of a valve seat and a valve cap; the valve seat has an accommodating room which is open upwards, and the valve cap is inserted in the upper portion of the accommodating room, wherein the outer periphery of the bottom of the valve cap is adapted to fit the inner wall of the upper portion of the valve seat in a sealing manner, and the inner wall of the valve seat located beneath the valve cap therefore forms the circumferential wall of the valve cavity; the sealing member is located beneath the valve cap and between the cartridge body and the valve seat; the water inlet passage is disposed in the valve cap, while the pressure relief passage and the water outlet passage are disposed in the valve seat.

Alternatively, the valve body is composed of a valve seat and a valve cap; the valve seat has an accommodating room which is open upwards, the valve cap is disposed at the upper portion of the accommodating room, and the valve cap has an extension projecting into the middle portion of the accommodating room, wherein the extension is adapted to fit the inner wall of the upper portion of the valve seat in a sealing manner, and the inner side wall of the extension together with inner wall of the lower portion of the valve seat therefore forms the circumferential wall of the valve cavity; the sealing member is arranged between the cartridge body and the extension of the valve cap, wherein the outer periphery of the upper part of the sealing member abuts against the extension of the valve cap so as to produce a seal; the water inlet passage is disposed in the valve cap, while the pressure relief passage and the water outlet passage are disposed in the valve seat.

The above-mentioned sealing member can follow the cartridge body to move up and down relative to the valve body, or alternatively, it is not movable relative to the valve body and only the cartridge body moves relative to the valve body.

In the case of a sealing member that can follow the cartridge body to move up and down, the middle part of the sealing member is fixedly connected with the cartridge body, so that it is slidable up and down together with the cartridge body relative to the valve body.

Preferentially, an annular receiving recess is provided peripherally in the cartridge body at the middle part, and the sealing member has a radially inwardly projecting rib provided in the inner circumferential wall at the middle part, wherein the rib is inserted in the receiving recess.

According to a further alternative embodiment of the present invention, also in the case of a sealing member that does not move relative to the valve body: the sealing member is disposed between the cartridge body and the valve body and is fixed relative to the valve body, wherein the outer periphery of the upper part of the sealing member is in contact with the inner wall of the valve body so as to produce a seal, and the lower part of the sealing member has a downwardly extending annular wall;
and the annular wall of the sealing member is arranged around the cartridge body from outside, with the side hole(s) being covered by the annular wall of the sealing member.

In order to facilitate setting the valve cartridge assembly in the valve cavity, the valve body is composed of a valve seat and a valve cap; the valve seat has an accommodating room which is open upwards, and the valve cap is inserted in the upper portion of the accommodating room; the water inlet passage is disposed in the valve cap, while the pressure relief passage and the water outlet passage are disposed in the valve seat.

In this case, as for the embodiment where the sealing member is fixed relative to the valve body, it is preferably provided that the valve seat has an inner shoulder on its inner wall, wherein the upper part of the sealing member is repressed between the bottom of valve cap and the inner shoulder, so that the sealing member and the valve body are fixed relative to each other.

In order to make the valve seat and valve cap restrainedly fixed to each other, the valve cap has laterally projecting plugs arranged diameterally on the outer periphery, and the valve seat has slots arranged in the side wall at the upper portion of the accommodating room for inserting the plugs.

In order to enable the cartridge body to seal the pressure relief passage effectively, a sealing cake made of flexible material is provided at the bottom of the cartridge body, wherein the sealing cake can fit an end face at the inlet of the pressure relief passage in a sealing manner.

Preferably, the valve cavity has an upwardly protruding projection on its bottom surface, and the cartridge body has an annular stop shoulder on its outer periphery, wherein the spring is disposed to be slipped over the projection, with the lower end of the spring abutting against the bottom surface of the valve cavity and the upper end of the spring abutting against the annular stop shoulder, and wherein the pressure relief passage extends upwards through the projection, and the end face at the inlet of the pressure relief passage is embodied as the top surface of the projection. With the provision of the projection, the cartridge body can block or release the pressure relief passage more quickly, so that the normal water supply and the pressure relief are implemented as soon as possible, which allows the whole pressure relief valve to be responsive in operation.

Preferably, a plurality of pressure relief grooves, for communicating the valve cavity and the pressure relief passage, are fabricated in the top surface of the projection, wherein the sealing cake is inlaid in the pressure relief grooves to produce a complete seal when the sealing cake fits the top surface of the projection in a sealing manner. With the provision of the pressure relief grooves, water under high pressure can be released preliminarily via the pressure relief grooves when the sealing cake goes slightly away from the top surface of the projection, which enables the pressure relief valve to relieve pressure more quickly.

Preferably, a gap for air flowing is present between the inner periphery of the lower part of the sealing member and the outer periphery of the lower part of the cartridge body. With the provision of the gap, an air-venting function is achieved. In a state of the water inlet passage being not supplied with water, as soon as water under high pressure enters into the valve cavity, the excess gas can be discharged from the gap, which allows valve cartridge assembly to be actuated by the water under high pressure more quickly.

Preferably, a sealing tube made of flexible material is inserted in the projection and located on the outer periphery of the pressure relief passage, wherein the top of the sealing tube protrudes to a higher level than the top surface of the projection, and pressure relief groove(s), for communicating the valve cavity and the pressure relief passage, is/are provided in the bottom surface of the cartridge body.

As a further improvement, the top surface of the sealing tube is configured in form of a convexly curved surface.

Compared with the prior art, the advantages of the present invention lie in that: when the machine is actuated normally to brew coffee, a water pump works; water under high pressure enters into the valve cavity from the water inlet passage, then it firstly gets into the pressure chamber of the cartridge body and drives the valve cartridge assembly to move downwards against the elastic force of the spring, until the bottom surface of the cartridge body blocks the pressure relief passage; water under high pressure continues entering the pressure chamber of the cartridge body; the cartridge body is obstructed so that it cannot continue to move downwards, and water under high pressure will flow through the side hole(s) and laterally push away the lower part of the sealing member, with the water under high pressure being discharged from the water outlet passage after passing through the side hole(s), and flowing into the brewing system for coffee-brewing;

When performing the pressure relief, the machine stops coffee-brewing, the water pump stops working and stops supplying pressure, there is no water under high pressure entering into the valve cavity from the water inlet passage any more, thus the valve cartridge assembly becomes free of pressure and, under the action of the spring, moves upwards away from the pressure relief passage, so that the pressure relief passage is opened; since the brewing system is still in a state of high pressure at this moment, the excess water and pressure in the brewing system and the pipelines is discharged via the pressure relief passage, so that a pressure relief is achieved. Such valve structure enables the pressure relief function of an electromagnetic valve to be realized efficiently, and specifically by means of a pressure relief based on mechanical principles, which involves a small number of simple components, and therefore the cost is far less than that of the electromagnetic valve.

### DESCRIPTION OF THE DRAWINGS

FIG. 1 illustrates a perspective schematic view of exemplary embodiment (I) according to the present invention.
FIG. 2 illustrates a sectional view of exemplary embodiment (I) according to the present invention.
FIG. 3 illustrates a sectional view of exemplary embodiment (I) according to the present invention in a normal operating state.
FIG. 4 illustrates a sectional view of exemplary embodiment (I) according to the present invention in a pressure relieving state.
FIG. 5 illustrates a perspective exploded view of exemplary embodiment (I) according to the present invention.
FIG. 6 illustrates a perspective schematic view of the cartridge body in exemplary embodiment (I) according to the present invention.
FIG. 7 illustrates a perspective schematic view of exemplary embodiment (II) according to the present invention.
FIG. 8 illustrates a sectional view of exemplary embodiment (II) according to the present invention.
FIG. 9 illustrates an enlarged view of section I in FIG. 8.
FIG. 10 illustrates a cut-open sectional view of the cartridge body and the sealing member in exemplary embodiment (II) according to the present invention.
FIG. 11 illustrates a cut-open sectional view of the valve body in exemplary embodiment (II) according to the present invention.
FIG. 12 illustrates a sectional view of exemplary embodiment (II) according to the present invention in a normal operating state.
FIG. 13 illustrates a sectional view of exemplary embodiment (II) according to the present invention in a pressure relieving state.
FIG. 14 illustrates a sectional view of exemplary embodiment (III) according to the present invention.
FIG 15 illustrates a perspective schematic view of exemplary embodiment (IV) according to the present invention.
FIG. 16 illustrates a sectional view of exemplary embodiment (IV) according to the present invention.
FIG. 17 illustrates a sectional view of exemplary embodiment (IV) according to the present invention in a normal operating state.
FIG. 18 illustrates a sectional view of exemplary embodiment (IV) according to the present invention in a pressure relieving state.
FIG. 19 illustrates a perspective exploded view of exemplary embodiment (IV) according to the present invention.
FIG. 20 illustrates a sectional perspective view of the cartridge body in exemplary embodiment (IV) according to the present invention.

### MODE FOR CARRYING OUT THE INVENTION

In the following, the present invention will be described further in details in light of the embodiments in the accompanying drawings.

### Exemplary Embodiment (I):

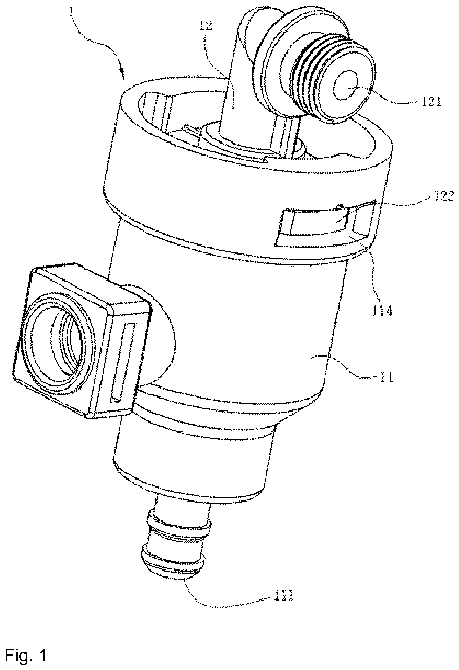

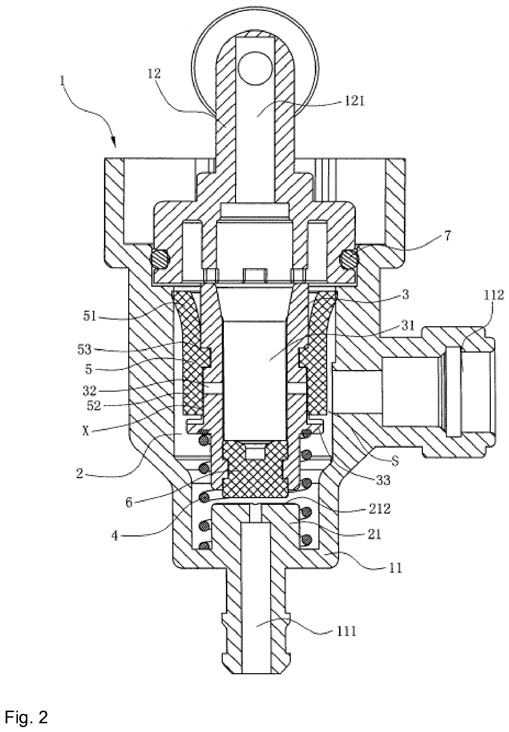

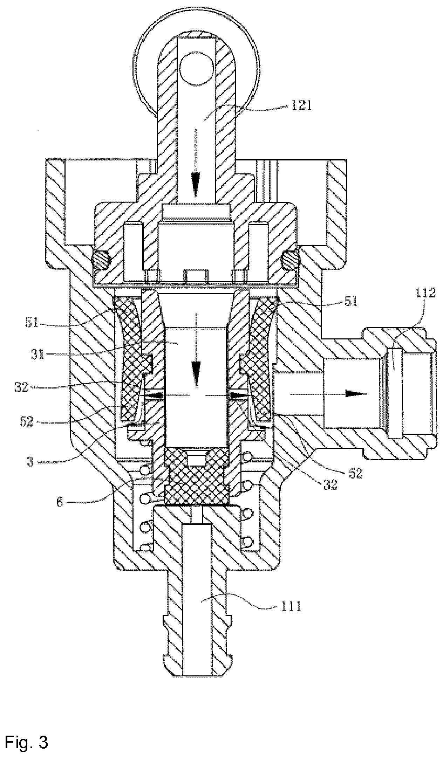

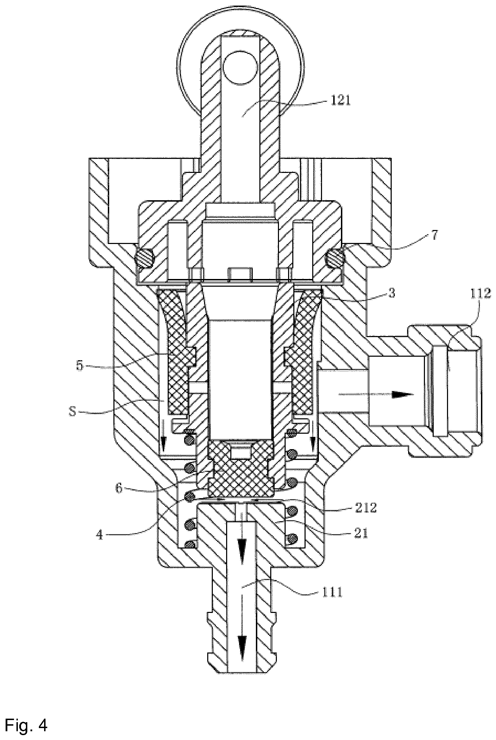

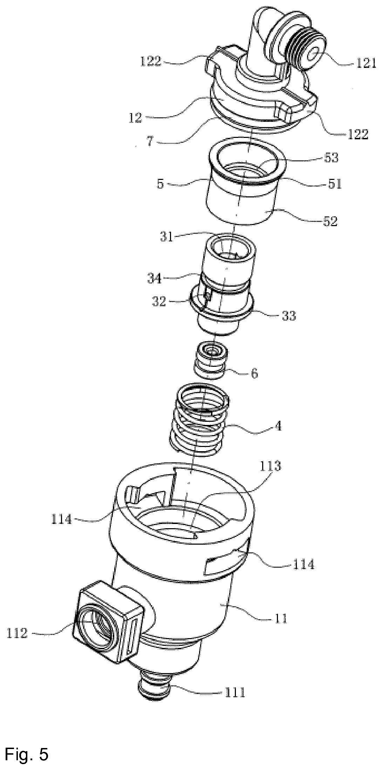

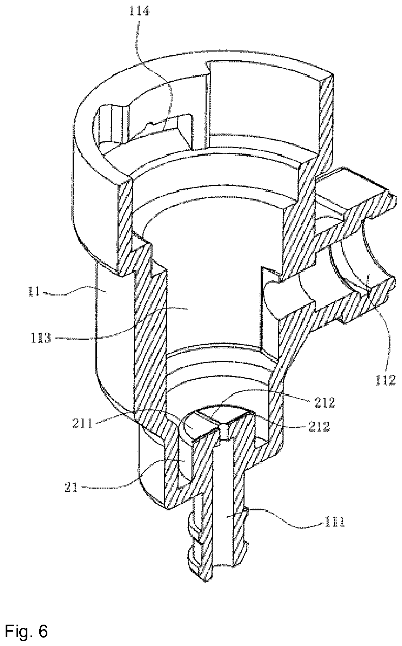

As shown in Figs. 1-6, it concerns a first embodiment according to the present invention.

The two-way pressure relief valve comprises a valve body 1 having a valve cavity 2 inside and a valve cartridge assembly disposed in the valve cavity 2.

The valve body 1 is provided at its top with a water inlet passage 121 communicating with the valve cavity 2, and at its bottom with a pressure relief passage 111 communicating with the valve cavity 2, while a water outlet passage 112 communicating with the valve cavity 2 is provided laterally in the valve body 1, and the valve cartridge assembly is provided in the valve cavity 2.

According to the present embodiment, the valve body 1 is composed of two parts, namely a valve seat 11 and a valve cap 12, wherein the valve seat 11 has an accommodating room 113 which is open upwards, and the valve cap 12 is inserted in the upper portion of the accommodating room 113, and wherein the outer periphery of the bottom of the valve cap 12 is adapted to fit the inner wall of the upper portion of the valve seat 11 in a sealing manner, and the inner wall of the valve seat 11 located beneath the valve cap 12 therefore forms the circumferential wall of the valve cavity 2.

Further, a sealing ring 7 is provided between the valve cap 12 and the inner wall of the valve seat 11 for sealing, and the valve cap 12 has laterally projecting plugs 122 arranged diameterally on the outer periphery, and the valve seat 11 has slots 114 arranged in the side wall at the upper portion of the accommodating room 113 for inserting the plugs 122.

Moreover, the water inlet passage 121 is disposed in the valve cap 12, while the pressure relief passage 111 and the water outlet passage 112 are disposed in the valve seat 11.

The valve cartridge assembly comprises a cartridge body 3 and a sealing member 5 made of flexible material.

The cartridge body 3 has a pressure chamber 31 which is open upwards, and the pressure chamber 31 communicates with the water inlet passage 121, wherein the cartridge body 3 is slidable up and down in the valve cavity 2 relative to the valve seat 11, a downward displacement of the cartridge body 3 enables it to fit an inlet end of the pressure relief passage 111 in a sealing manner so as to block the pressure relief passage 111.

A restoring means, which makes the cartridge body 3 keep a tendency of an upward displacement to leave the inlet end of the pressure relief passage 111, is provided between the cartridge body 3 and the valve body 1. According to the present embodiment, the restoring means is configured as a spring 4.

Side hole(s) 32 for communicating the pressure chamber 31 and the valve cavity 2 is/are provided in the circumferential wall of the cartridge body 3. There are two side holes 32 in the present embodiment.

A sealing cake 6 made of flexible material is provided at the bottom of the cartridge body 3, wherein the sealing cake 6 can fit an end face at the inlet of the pressure relief passage 111 in a sealing manner.

The valve cavity 2 has an upwardly protruding projection 21 on its bottom surface, and the cartridge body 3 has an annular stop shoulder 33 on its outer periphery, wherein the spring 4 is disposed to be slipped over the projection 21, with the lower end of the spring 4 abutting against the bottom surface of the valve cavity 2 and the upper end of the spring 4 abutting against the annular stop shoulder 33; and wherein the pressure relief passage 111 extends upwards through the projection 21, and the end face at the inlet of the pressure relief passage 111 is embodied as the top surface 211 of the projection 21. A plurality of pressure relief grooves 212, for communicating the valve cavity 2 and the pressure relief passage 111, are fabricated in the top surface 211 of the projection 21, wherein the sealing cake 6 is inlaid in the pressure relief grooves 212 to produce a complete seal when the sealing cake 6 fits the top surface 211 of the projection 21 in a sealing manner.

The sealing member 5 can be made of silicone material, and the sealing member 5 generally assumes a tubular shape. The sealing member 5 is located beneath the valve cap 12 and between the outer circumferential wall of the cartridge body 3 and the valve seat 11. The middle part of the sealing member 5 is fixedly connected with the cartridge body 3, so that it is slidable up and down together with the cartridge body 3.

An annular receiving recess 34 is provided peripherally in the cartridge body 3 at the middle part, and the sealing member 5 has a radially inwardly projecting rib 53 provided in the inner circumferential wall at the middle part, wherein the rib 53 is inserted in the receiving recess 34. The outer periphery of the upper part 51 of the sealing member 5 is in contact with the inner wall of the valve cavity 2 so as to produce a seal, and the lower part 52 of the sealing member 5 covers the side hole(s) 32; and moreover, a space S, available for the lower part 52 of the sealing member 5 to expand and deform radially outwards, is present between the outer periphery of the lower part 52 of the sealing member 5 and the inner wall of the valve cavity 2. A gap X for air flowing is present between the inner periphery of the lower part 52 of the sealing member 5 and the outer periphery of the lower part of the cartridge body 3.

The function principle and process of the two-way pressure relief valve are as follows:
Normal operation state: As the machine is actuated normally to brew coffee, a water pump works; water under high pressure enters into the valve cavity 2 from the water inlet passage 121, then it firstly gets into the pressure chamber 31 of the cartridge body 3 and drives the valve cartridge assembly to move downwards against the elastic force of the spring 4, until the bottom surface of the cartridge body 3 blocks the pressure relief passage 111; water under high pressure continues entering the pressure chamber 31 of the cartridge body 3; the cartridge body 3 is obstructed so that it cannot continue to move downwards, and water under high pressure will flow through the two side holes 32 and laterally push away the lower part 52 of the sealing member 5, and thus the lower part 52 of the sealing member 5 expands and deforms outwards, so that the water under high pressure is discharged from the water outlet passage 112 after passing through the side holes 32, and flows into the brewing system for coffee-brewing.

Pressure relief process: As the machine stops coffee-brewing, the water pump stops working and stops supplying pressure, there is no water under high pressure entering into the valve cavity 2 from the water inlet passage 121 any more, thus the valve cartridge assembly becomes free of pressure, and the cartridge body 3, under the action of the spring 4, moves upwards away from the inlet end of the pressure relief passage 111, so that the pressure relief passage 111 is opened; since the brewing system is still in a state of high pressure at this moment, the excess water and pressure in the brewing system and the pipelines is discharged via the pressure relief passage 111, so that a pressure relief is achieved.

### Exemplary Embodiment (II):

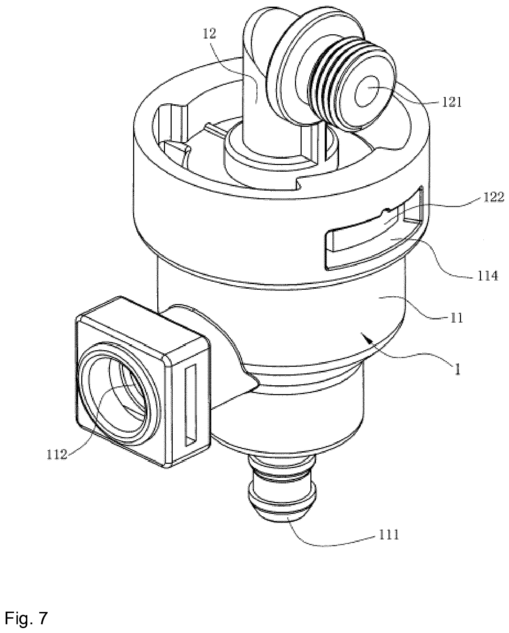

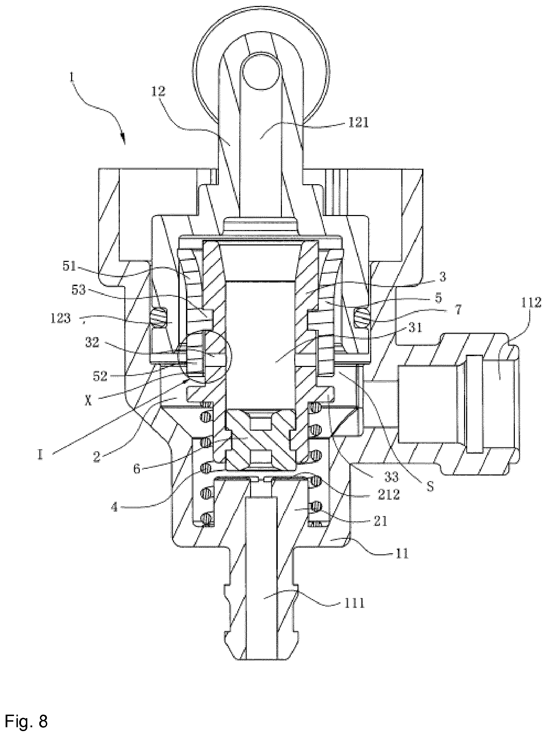

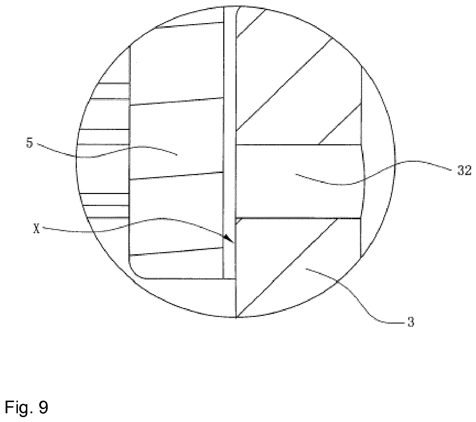

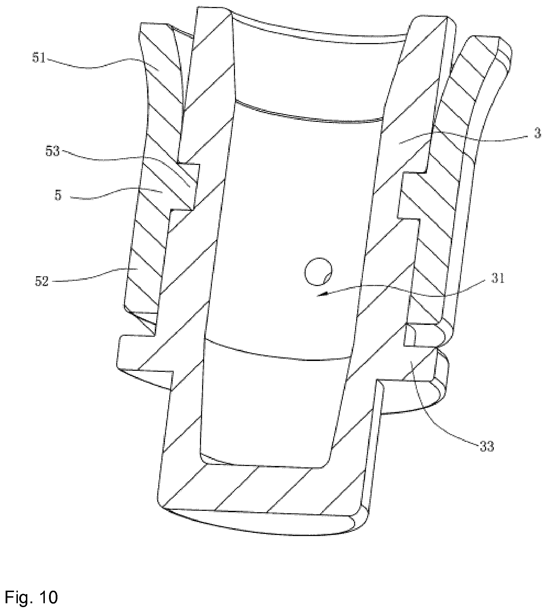

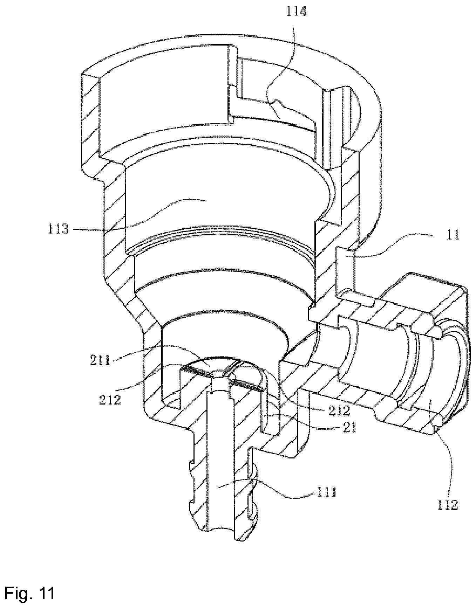

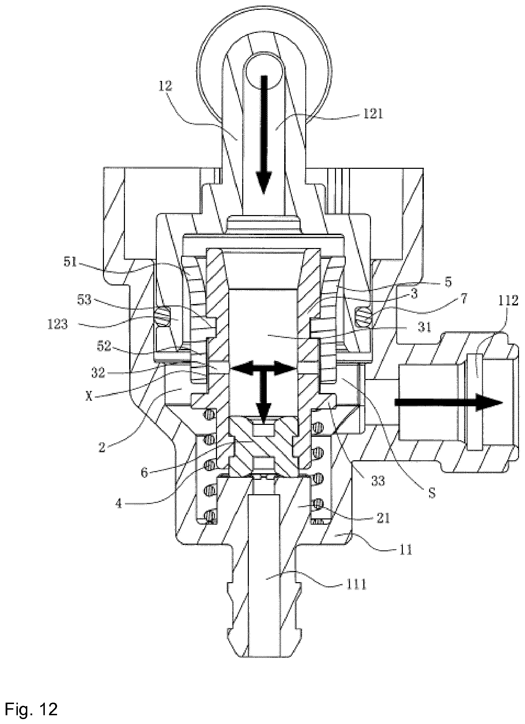

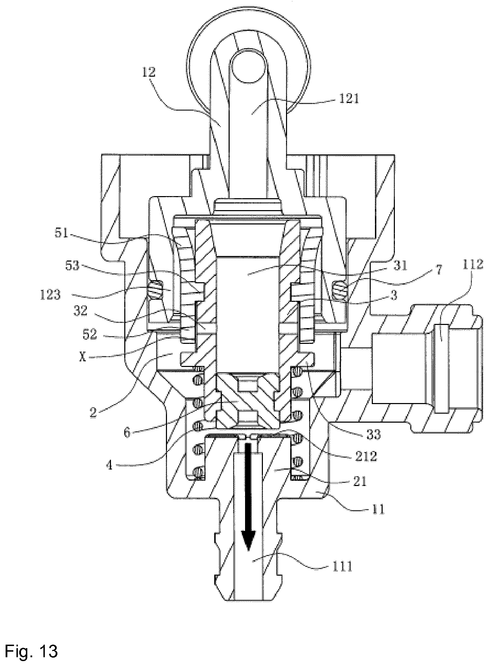

As shown in Figs. 7-13, it concerns a second embodiment according to the present invention.

The second embodiment differs from the first embodiment only in the structure of the valve cap 12 and the setting position of the sealing member 5.

More specifically, the valve cap 12 is disposed at the upper portion of the accommodating room 113, and the valve cap 12 has an extension 123 projecting into the middle portion of the accommodating room 113, wherein the extension 123 is adapted to fit the inner wall of the upper portion of the valve seat 11 in a sealing manner, and the inner side wall of the extension 123 together with inner wall of the lower portion of the valve seat 11 therefore forms the circumferential wall of the valve cavity 2.

The sealing member 5 is arranged between the cartridge body 3 and the extension 123 of the valve cap 12, and it is slidable up and down together with the cartridge body 3 relative to the valve body 1, wherein the outer periphery of the upper part 51 of the sealing member 5, during its sliding movement, abuts against the extension of the valve cap 12 all the while so as to produce a seal.

### Exemplary Embodiment (III):

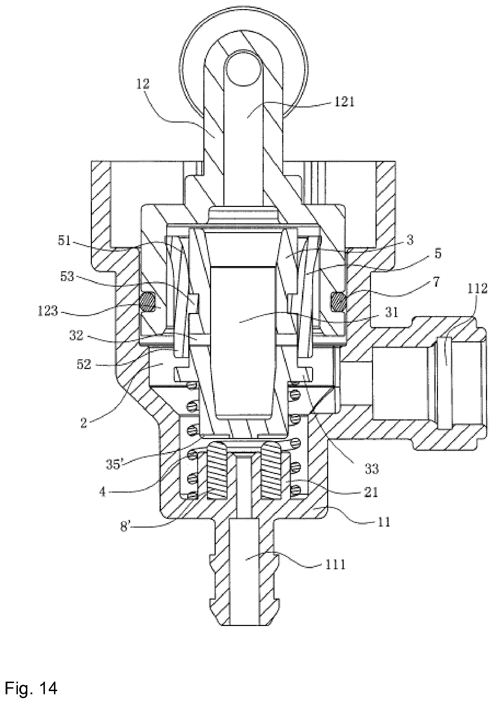

As shown in Fig. 14, it concerns a third embodiment according to the present invention.

The third embodiment differs from the second embodiment in that the provision of the sealing cake 6 at the bottom of the cartridge body 3 is cancelled, with a sealing tube 8' made of flexible material being provided instead. In particular, the sealing tube 8' is inserted in the projection 21 and located on the outer periphery of the pressure relief passage 111, wherein the top of the sealing tube 8' protrudes to a higher level than the top surface of the projection 21, and pressure relief groove(s) 35', for communicating the valve cavity 2 and the pressure relief passage 111, is/are provided in the bottom surface of the cartridge body 3. According to the present embodiment, there are four pressure relief grooves 35' distributed radially in the bottom surface of the cartridge body 3.

In operation, when the cartridge body 3 moves downwards, with its bottom surface closely abutting the top of the sealing tube 8' not yet or barely contacting the same, the valve cavity 2 and the pressure relief passage 111 are communicated via the pressure relief grooves 35', so that an effect of pressure relief can be achieved;
when the pressure within the pressure chamber 31 becomes sufficiently high, the cartridge body 3 is driven to squeeze the sealing tube 8' with the bottom surface of the cartridge body 3, and to make the sealing tube 8' of flexible material deform to be inlaid into the pressure relief grooves 35' in the bottom surface, so that the pressure relief passage 111 is blocked.

In order to achieve a better sealing effect of the sealing tube 8' against the pressure relief grooves 35', the top surface of the sealing tube 8' according to the present embodiment is configured in form of a convexly curved surface. Naturally, it also can be configured as a spherical surface, a plane surface or other shapes being favorable for the sealing effect according to the actual requirements.

### Exemplary Embodiment (IV):

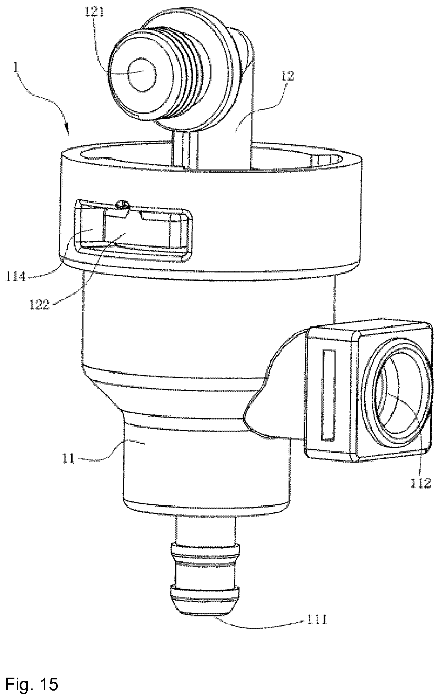

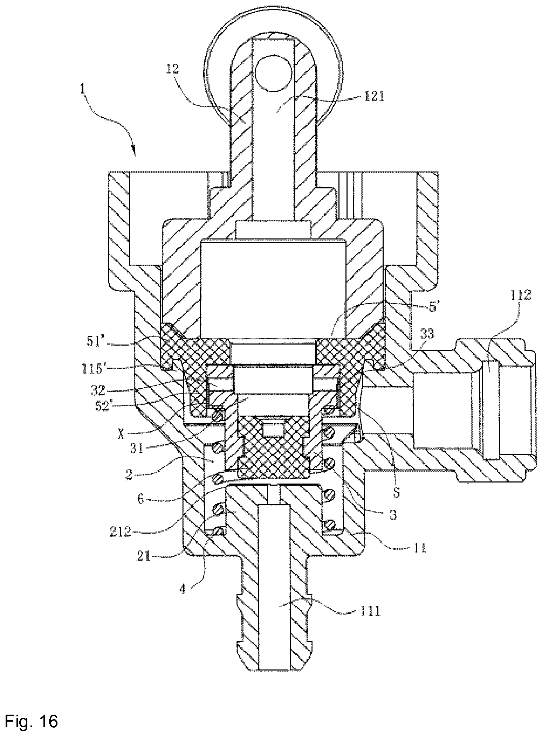

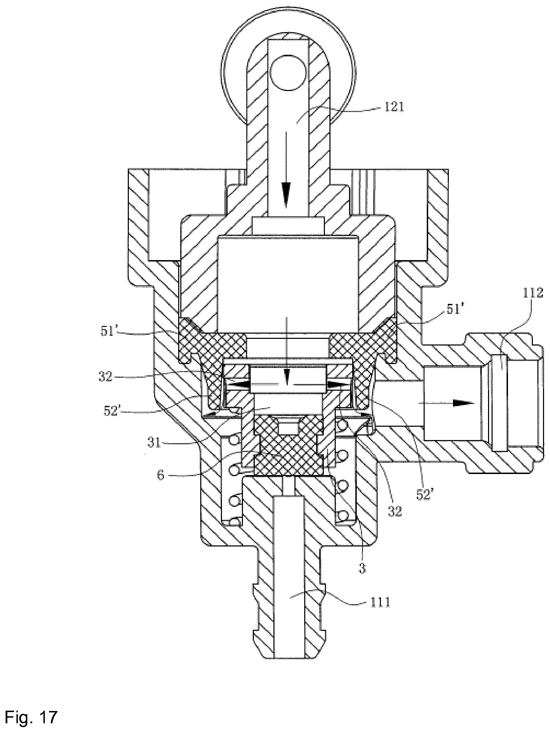

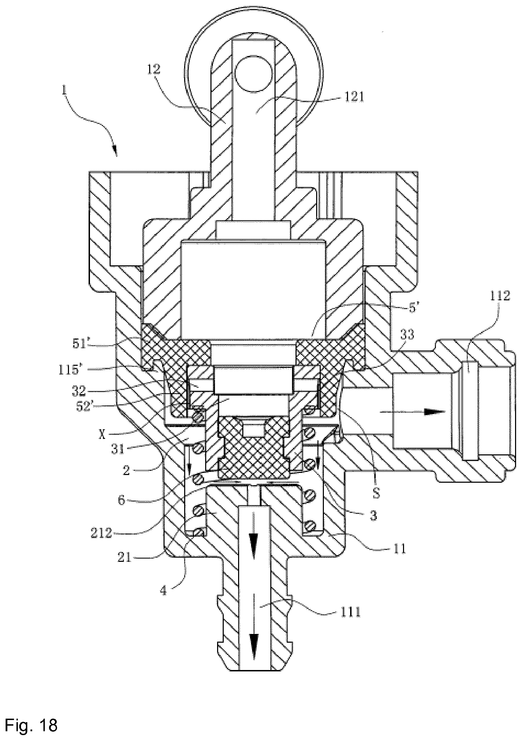

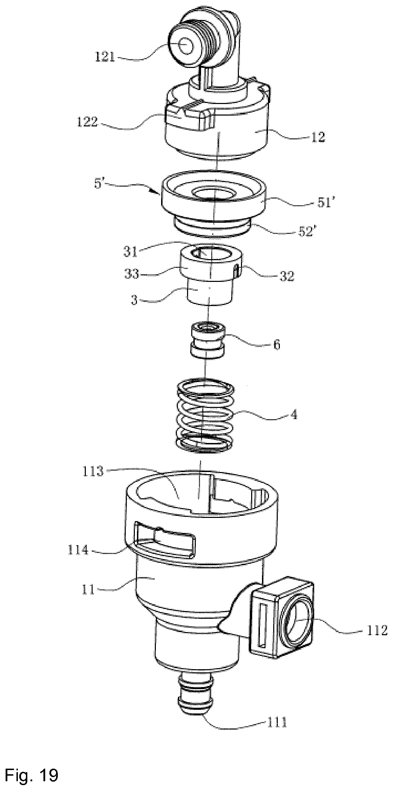

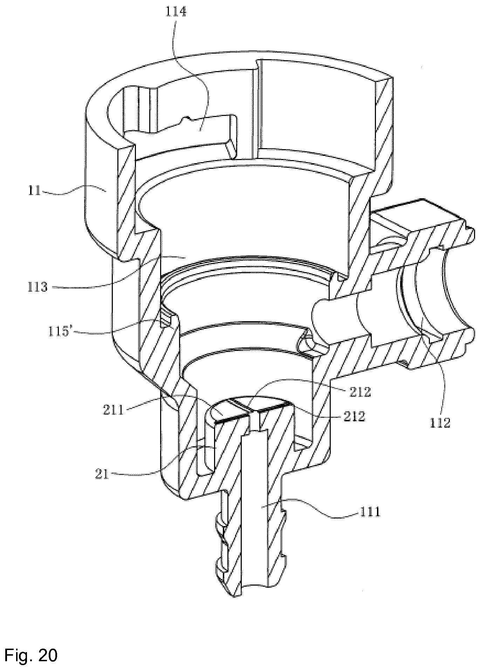

As shown in Figs. 15-21, it concerns a fourth embodiment according to the present invention.

The fourth embodiment differs from the first embodiment mainly in the arranging mode between the valve cap 12 and the valve seat 11, the structure of the sealing member 5', and the arranging mode between this sealing member and the valve seat 11.

More specifically, the sealing member 5' is disposed between the cartridge body 3 and the valve seat 11 and is fixed relative to the valve seat 11, wherein the sealing member 5' cannot follow the cartridge body 3 to move and only the cartridge body 3 moves relative to the valve body 1.

The outer periphery of the upper part 51' of the sealing member 5' is in contact with the inner wall of the valve seat 11 so as to produce a seal, and the lower part of the sealing member 5' has a downwardly extending annular wall 52'.

And the annular wall 52' of the sealing member 5' is arranged around the cartridge body 3 from outside, with the side hole(s) 32 being covered by the annular wall 52' of the sealing member 5'; and moreover, a space S, available for the lower part of the annular wall 52' to expand and deform radially outwards, is present between the outer periphery of the lower part of the annular wall 52' of the sealing member 5 and the circumferential wall of the valve cavity 2.

A gap X for air flowing is present between the inner periphery of annular wall 52' of the sealing member 5' and the outer periphery of the lower part of the cartridge body 3.

The valve seat 11 has an inner shoulder 115' on its inner wall, and the valve cap 12 is inserted in the accommodating room 113, wherein the provision of the sealing ring 7 according to the first embodiment is cancelled, and wherein the upper part 51' of the sealing member 5' is repressed between the bottom of valve cap 12 and the inner shoulder 115', so that the sealing member 5' and the valve body 11 are fixed relative to each other; and the lower inner wall of the valve seat 11 located beneath the valve cap 12 therefore forms the circumferential wall of the valve cavity 2.

Besides, the basic structure of the cartridge body 3 and the operating process are similar to the first embodiment. Nevertheless, the structure of the cartridge body 3 is slightly different from that of the first embodiment, since this cartridge body 3 is not required to be fixedly connected with the sealing member 5'.

The function principle and process of the two-way pressure relief valve according to the fourth embodiment are as follows:
Normal operation state: As the machine is actuated normally to brew coffee, a water pump works; water under high pressure enters into the valve cavity 2 from the water inlet passage 121, then it firstly gets into the pressure chamber 31 of the cartridge body 3 and drives the cartridge body 3 to move downwards against the elastic force of the spring 4; during the whole downward displacement of the cartridge body 3, the side holes 32 are situated within the annular wall 52 all the while, until the bottom surface of the cartridge body 3 blocks the pressure relief passage 111; water under high pressure continues entering the pressure chamber 31 of the cartridge body 3; the cartridge body 3 is obstructed so that it cannot continue to move downwards, and water under high pressure will flow through the two side holes 32 and laterally push forward the annular wall 52 of the sealing member 5, and thus the annular wall 52 of the sealing member 5 expands and deforms radially outwards, so that the water under high pressure is discharged from the water outlet passage 112 after passing through the side holes 32, and flows into the brewing system for coffee-brewing.

Pressure relief process: As the machine stops coffee-brewing, the water pump stops working and stops supplying pressure, there is no water under high pressure entering into the valve cavity 2 from the water inlet passage 121 any more, thus the valve cartridge assembly becomes free of pressure, and the cartridge body 3, under the action of the spring 4, moves upwards away from the inlet end of the pressure relief passage 111, so that the pressure relief passage 111 is opened; since the brewing system is still in a state of high pressure at this moment, the excess water and pressure in the brewing system and the pipelines is discharged via the pressure relief passage 111, so that a pressure relief is achieved.

Although the above description relates to the preferred embodiments of the present invention in details, it should be clearly understood that for those skilled in the art, the present invention may involve various modifications and variations. Any amendments, equivalents, improvements and so on made within the spirit and principle of the present invention are to be included within the protection scope of the present invention.

## Claims

1. A two-way pressure relief valve, comprising a valve body (1) having a valve cavity (2) inside and a valve cartridge assembly disposed in the valve cavity (2);
wherein the valve body (1) is provided at its top with a water inlet passage (121) communicating with the valve cavity (2), and at its bottom with a pressure relief passage (111) communicating with the valve cavity (2), while a water outlet passage (112) communicating with the valve cavity (2) is provided laterally in the valve body (1); wherein the valve cartridge assembly comprises a cartridge body (3) and a sealing member (5) made of flexible material;
the cartridge body (3) has a pressure chamber (31) which is open upwards, wherein the cartridge body (3) is slidable up and down in the valve cavity (2) relative to the valve body (1), a downward displacement of the cartridge body (3) enables it to fit an inlet end of the pressure relief passage (111) in a sealing manner so as to block the pressure relief passage (111), a restoring means, which makes the cartridge body (3) keep a tendency of an upward displacement to leave the inlet end of the pressure relief passage (111), is provided between the cartridge body (3) and the valve body (1),
**characterised in that** side hole(s) (32) for communicating the pressure chamber (31) and the valve cavity (2) is/are provided in the circumferential wall of the cartridge body (3);
the sealing member (5) is arranged between the circumferential walls of the cartridge body (3) and of the valve cavity (2), wherein the outer periphery of the upper part (51) of the sealing member (5) is in contact with the circumferential wall of the valve cavity (2) so as to produce a seal, and the lower part (52) of the sealing
member (5) covers the side hole(s) (32);
and moreover, a space (S), available for the lower part (52) of the sealing member (5) to expand and deform radially outwards, is present between the outer periphery of the lower part (52) of the sealing member (5) and the outer circumferential wall of the valve cavity (2).

2. The two-way pressure relief valve according to claim 1, **characterized in that** the restoring means is embodied as a spring (4) or an elastic rubber, the two ends of which are supported respectively between the outer wall of the cartridge body (3) and the inner wall of the valve body (1).

3. The two-way pressure relief valve according to claim 1, **characterized in that**
the valve body (1) is composed of a valve seat (11) and a valve cap (12);
the valve seat (11) has an accommodating room (113) which is open upwards, and the valve cap (12) is inserted in the upper portion of the accommodating room (113), wherein the outer periphery of the bottom of the valve cap (12) is adapted to fit the inner wall of the upper portion of the valve seat (11) in a sealing manner, and the inner wall of the valve seat (11) located beneath the valve cap (12) therefore forms the circumferential wall of the valve cavity (2);
the sealing member (5) is located beneath the valve cap (12) and between the cartridge body (3) and the valve seat (11);
the water inlet passage (121) is disposed in the valve cap (12), while the pressure relief passage (111) and the water outlet passage (112) are disposed in the valve seat (11).

4. The two-way pressure relief valve according to claim 1, **characterized in that**
the valve body (1) is composed of a valve seat (11) and a valve cap (12);
the valve seat (11) has an accommodating room (113) which is open upwards, the valve cap (12) is disposed at the upper portion of the accommodating room (113), and the valve cap (12) has an extension (123) projecting into the middle portion of the accommodating room (113), wherein the extension (123) is adapted to fit the inner wall of the upper portion of the valve seat (11) in a sealing manner, and the inner side wall of the extension (123) together with inner wall of the lower portion of the valve seat (11) therefore forms the circumferential wall of the valve cavity (2);
the sealing member (5) is arranged between the cartridge body (3) and the extension (123) of the valve cap (12), wherein the outer periphery of the upper part (51) of the sealing member (5) abuts against the extension (123) of the valve cap (12) so as to produce a seal;
the water inlet passage (121) is disposed in the valve cap (12), while the pressure relief passage (111) and the water outlet passage (112) are disposed in the valve seat (11).

5. The two-way pressure relief valve according to claim 1, **characterized in that** the middle part of the sealing member (5) is fixedly connected with the cartridge body (3), so that it is slidable up and down together with the cartridge body (3) relative to the valve body (1).

6. The two-way pressure relief valve according to claim 5, **characterized in that** an annular receiving recess (34) is provided peripherally in the cartridge body (3) at the middle part, and the sealing member (5) has a radially inwardly projecting rib (53) provided in the inner circumferential wall at the middle part, wherein the rib (53) is inserted in the receiving recess (34).

7. The two-way pressure relief valve according to claim 1, **characterized in that**
the sealing member (5') is disposed between the cartridge body (3) and the valve body (1) and is fixed relative to the valve body (1), wherein the outer periphery of the upper part (51') of the sealing member (5') is in contact with the inner wall of the valve body (1) so as to produce a seal, and the lower part of the sealing member (5') has a downwardly extending annular wall (52');
and the annular wall (52') of the sealing member (5') is arranged around the cartridge body (3) from outside, with the side hole(s) (32) being covered by the annular wall (52') of the sealing member (5').

8. The two-way pressure relief valve according to claim 7, **characterized in that**
the valve body (1) is composed of a valve seat (11) and a valve cap (12);
the valve seat (11) has an accommodating room (113) which is open upwards, and the valve cap (12) is inserted in the upper portion of the accommodating room (113);
the water inlet passage (121) is disposed in the valve cap (12), while the pressure relief passage (111) and the water outlet passage (112) are disposed in the valve seat (11).

9. The two-way pressure relief valve according to claim 8, **characterized in that** the valve seat (11) has an inner shoulder (115') on its inner wall, wherein the upper part (51') of the sealing member (5') is repressed between the bottom of valve cap (12) and the inner shoulder (115'), so that the sealing member (5') and the valve body (11) are fixed relative to each other.

10. The two-way pressure relief valve according to any one of claim 3 or 4 or 8, **characterized in that** the valve cap (12) has laterally projecting plugs (122) arranged diameterally on the outer periphery, and the valve seat (11) has slots (114) arranged in the side wall at the upper portion of the accommodating room (113) for inserting the plugs (122).

11. The two-way pressure relief valve according to claim 2, **characterized in that** a sealing cake (6) made of flexible material is provided at the bottom of the cartridge body (3), wherein the sealing cake (6) can fit an end face at the inlet of the pressure relief passage (111) in a sealing manner.

12. The two-way pressure relief valve according to claim 11, **characterized in that** the valve cavity (2) has an upwardly protruding projection (21) on its bottom surface, and the cartridge body (3) has an annular stop shoulder (33) on its outer periphery, wherein the spring (4) is disposed to be slipped over the projection (21), with the lower end of the spring (4) abutting against the bottom surface of the valve cavity (2) and the upper end of the spring (4) abutting against the annular stop shoulder (33), and wherein the pressure relief passage (111) extends upwards through the projection (21), and the end face at the inlet of the pressure relief passage (111) is embodied as the top surface (211) of the projection (21).

13. The two-way pressure relief valve according to claim 12, **characterized in that** a plurality of pressure relief grooves (212), for communicating the valve cavity (2) and the pressure relief passage (111), are fabricated in the top surface (211) of the projection (21), wherein the sealing cake (6) is inlaid in the pressure relief grooves (212) to produce a complete seal when the sealing cake (6) fits the top surface (211) of the projection (21) in a sealing manner.

14. The two-way pressure relief valve according to claim 1, **characterized in that** a gap (X) for air flowing is present between the inner periphery of the lower part (52) of the sealing member (5) and the outer periphery of the lower part of the cartridge body (3).

15. The two-way pressure relief valve according to claim 4, **characterized in that** a sealing tube (8') made of flexible material is inserted in the projection (21) and located on the outer periphery of the pressure relief passage (111), wherein the top of the sealing tube (8') protrudes to a higher level than the top surface of the projection (21), and pressure relief groove(s) (35'), for communicating the valve cavity (2) and the pressure relief passage (111), is/are provided in the bottom surface of the cartridge body (3).

## Patentansprüche

1. Ein Zweiwege-Druckentlastungsventil, umfassend einen Ventilkörper (1) mit einem Ventilhohlraum (2) im Inneren und eine Ventilkartuschenanordnung, die in dem Ventilhohlraum (2) angeordnet ist;
wobei der Ventilkörper (1) an seiner Oberseite mit einem Wassereinlassdurchlass (121) versehen ist, der mit dem Ventilhohlraum (2) in Verbindung steht, und an seinem Boden mit einem Druckentlastungsdurchlass (111) mit dem Ventilhohlraum (2) in Verbindung steht, während ein Wasserauslassdurchlass (112), der mit dem Ventilhohlraum (2) in Verbindung steht, seitlich in dem Ventilkörper (1) vorgesehen ist;
wobei die Ventilkartuschenanordnung einen Kartuschenkörper (3) und ein aus flexiblem Material hergestelltes Dichtungselement (5) umfasst;
der Kartuschenkörper (3) eine Druckkammer (31) aufweist, die nach oben offen ist, wobei der Kartuschenkörper (3) in dem Ventilhohlraum (2) gegenüber dem Ventilkörper (1) nach unten und oben verschiebbar ist, eine Abwärtsverschiebung des Kartuschenkörpers (3) es ermöglicht, ein Einlassende des Druckentlastungsdurchlasses (111) abdichtend anzubringen, um so den Druckentlastungsdurchlass (111) zu blockieren, ein Rückstellmittel, das den Kartuschenkörper (3) dazu bringt, eine Tendenz einer Aufwärtsverschiebung zu behalten, um das Einlassende des Druckentlastungsdurchlasses (111) zu verlassen, zwischen dem Kartuschenkörper (3) und dem Ventilkörper (1) vorgesehen ist,
**dadurch gekennzeichnet, dass** Seitenöffnung(en) (32) zum Verbinden der Druckkammer (31) und des Ventilhohlraums (2) in der Umfangswand des Kartuschenkörpers (3) vorgesehen ist/sind;
das Dichtungselement (5) zwischen den Umfangswänden des Kartuschenkörpers (3) und des Ventilhohlraums (2) angeordnet ist, wobei der äußere Umfang des oberen Teils (51) des Dichtungselements (5) in Kontakt mit der Umfangswand des Ventilhohlraums (2) ist, um eine Dichtung zu bilden, und der untere Teil (52) des Dichtungselements (5) die Seitenöffnung(en) (32) bedeckt;
und außerdem ein Raum (S), der für den unteren Teil (52) des Dichtungselements (5) verfügbar ist, um sich radial nach außen auszudehnen und zu verformen, zwischen dem äußeren Umfang des unteren Teils (52) des Dichtungselements (5) und der äußeren Umfangswand des Ventilhohlraums (2) vorhanden ist.

2. Zweiwege-Druckentlastungsventil nach Anspruch 1, **dadurch gekennzeichnet, dass** das Rückstellmittel als Feder (4) oder elastischer Gummi ausgebildet ist, dessen beide Enden jeweils zwischen der Außenwand des Kartuschenkörpers (3) und der Innenwand des Ventilkörpers (1) abgestützt sind.

3. Zweiwege-Druckentlastungsventil nach Anspruch 1, **dadurch gekennzeichnet, dass**
der Ventilkörper (1) aus einem Ventilsitz (11) und einer Ventilkappe (12) besteht;
der Ventilsitz (11) einen Aufnahmeraum (113) aufweist, der nach oben offen ist, und die Ventilkappe (12) in dem oberen Teil des Aufnahmeraums (113) eingesetzt ist, wobei der Außenumfang des Bodens der Ventilkappe (12) dazu geeignet ist, an die Innenwand des oberen Abschnitts des Ventilsitzes (11) in einer abdichtenden Weise zu passen, und die Innenwand des Ventilsitzes (11), die unterhalb der Ventilkappe (12) angeordnet ist, daher die Umfangswand des Ventilhohlraums (2) bildet;
sich das Dichtungselement (5) unterhalb der Ventilkappe (12) und zwischen dem Kartuschenkörper (3) und dem Ventilsitz (11) befindet; der Wassereinlassdurchlass (121) in der Ventilkappe (12) angeordnet ist, während der Druckentlastungsdurchlass (111) und der Wasserauslassdurchlass (112) im Ventilsitz (11) angeordnet sind.

4. Zwei-Wege-Druckentlastungsventil nach Anspruch 1, **dadurch gekennzeichnet, dass**
der Ventilkörper (1) aus einem Ventilsitz (11) und einer Ventilkappe (12) besteht;
der Ventilsitz (11) einen nach oben offenen Aufnahmeraum (113) aufweist, wobei die Ventilkappe (12) im oberen Bereich des Aufnahmeraums (113) angeordnet ist und die Ventilkappe (12) einen Vorsprung (123) aufweist, der in den mittleren Abschnitt des Aufnahmeraums (113) ragt, wobei der Vorsprung (123) dazu geeignet ist, an die Innenwand des oberen Abschnitts des Ventilsitzes (11) in einer abdichtenden Weise zu passen, und die innere Seitenwand des Vorsprungs (123) zusammen mit der Innenwand des unteren Teils des Ventilsitzes (11) daher die Umfangswand des Ventilhohlraums (2) bildet;
das Dichtungselement (5) zwischen dem Kartuschenkörper (3) und dem Vorsprung (123) der Ventilkappe (12) angeordnet, wobei der Außenumfang des oberen Teils (51) des Dichtungselements (5) an dem Vorsprung (123) der Ventilkappe (12) anliegt, um eine Dichtung zu bilden;
der Wassereinlassdurchlass (121) in der Ventilkappe (12) angeordnet ist, während der Druckentlastungsdurchlass (111) und der Wasserauslassdurchlass (112) im Ventilsitz (11) angeordnet sind.

5. Zweiwege-Druckentlastungsventil nach Anspruch 1, **dadurch gekennzeichnet, dass** das Mittelteil des Dichtungselements (5) fest mit dem Kartuschenkörper (3) verbunden ist, so dass es zusammen mit dem Kartuschenkörper (3) relativ zum Ventilkörper (1) auf und ab gleitbar ist.

6. Zweiwege-Druckentlastungsventil nach Anspruch 5, **dadurch gekennzeichnet, dass** am Kartuschenkörper (3) am Mittelteil eine ringförmige Aufnahmevertiefung (34) vorgesehen ist und das Dichtteil (5) eine radial nach innen vorspringende Rippe aufweist (53), die in der Innenumfangswand am Mittelteil vorgesehen ist, wobei die Rippe (53) in der Aufnahmevertiefung (34) eingesetzt ist.

7. Zweiwege-Druckentlastungsventil nach Anspruch 1, **dadurch gekennzeichnet, dass** das Dichtungselement (5') zwischen dem Kartuschenkörper (3) und dem Ventilkörper (1) angeordnet ist und relativ zu dem Ventilkörper (1) befestigt ist, wobei der äußere Umfang des oberen Teils (51') des Dichtungselement (5') mit der Innenwand des Ventilkörpers (1) kontaktierend ist, um eine Dichtung zu bilden, und der untere Teil des Dichtungselements (5') eine sich nach unten erstreckende ringförmige Wand (52') aufweist;
und die ringförmige Wand (52') des Dichtungselements (5') von außen um den Kartuschenkörper (3) herum angeordnet ist, wobei die Seitenöffnung(en) (32) durch die ringförmige Wand (52') des Dichtungselements (5') bedeckt sind.

8. Zweiwege-Druckentlastungsventil nach Anspruch 7, **dadurch gekennzeichnet, dass**
der Ventilkörper (1) aus einem Ventilsitz (11) und einer Ventilkappe (12) besteht;
der Ventilsitz (11) einen Aufnahmeraum (113) aufweist, der nach oben offen ist, und die Ventilkappe (12) in dem oberen Teil des Aufnahmeraums (113) eingesetzt ist;
der Wassereinlassdurchlass (121) in der Ventilkappe (12) angeordnet ist, während der Druckentlastungsdurchlass (111) und der Wasserauslassdurchlass (112) in dem Ventilsitz (11) angeordnet sind.

9. Zweiwege-Druckentlastungsventil nach Anspruch 8, **dadurch gekennzeichnet, dass** der Ventilsitz (11) an seiner Innenwandung eine innere Schulter (115') aufweist, wobei der obere Teil (51') des Dichtungselements (5') zwischen dem Boden der Ventilkappe (12) und der inneren Schulter (115') zurückgedrückt ist, so dass das Dichtungselement (5 ') und der Ventilkörper (11) relativ zueinander fixiert sind.

10. Zweiwege-Druckentlastungsventil nach einem der Ansprüche 3 oder 4 oder 8, **dadurch gekennzeichnet, dass** die Ventilkappe (12) seitlich vorstehende Vorsprünge (122) aufweist, die diametral am Außenumfang angeordnet sind, und der Ventilsitz (11) Schlitze (114) aufweist, die in der Seitenwand an dem oberen Abschnitt des Aufnahmeraums (113) zum Einführen der Vorsprünge (122) angeordnet sind.

11. Zweiwege-Druckentlastungsventil nach Anspruch 2, **dadurch gekennzeichnet, dass** am Boden des Kartuschenkörpers (3) ein Dichtungsstück (6) aus flexiblem Material vorgesehen ist, wobei das Dichtungsstück (6) an einer Endfläche an dem Einlass des Druckentlastungsdurchlass (111) in einer abdichtenden Weise anbringbar ist.

12. Zweiwege-Druckentlastungsventil nach Anspruch 11, **dadurch gekennzeichnet, dass** der Ventilhohlraum (2) an seiner Bodenfläche einen nach oben vorstehenden Vorsprung (21) aufweist, und der Kartuschenkörper (3) eine ringförmige Anschlagschulter (33) auf seinem äußeren Umfang aufweist, wobei die Feder (4) so angeordnet ist, dass sie über den Vorsprung (21) schiebbar ist, wobei das untere Ende der Feder (4) gegen die Bodenfläche des Ventilhohlraums (2) anliegend ist und das obere Ende der Feder (4) an der ringförmigen Anschlagschulter (33) anliegend ist, und wobei der Druckentlastungsdurchlass (111) sich nach oben durch den Vorsprung (21) erstreckend ist, und die Endfläche am Einlass des Druckentlastungsdurchlasses (111) als die obere Oberfläche (211) des Vorsprungs (21) ausgebildet ist.

13. Zweiwege-Druckentlastungsventil nach Anspruch 12, **dadurch gekennzeichnet, dass** eine Vielzahl von Druckentlastungsnuten (212) zum Verbinden des Ventilhohlraums (2) und des Druckentlastungsdurchlasses (111) in der oberen Oberfläche (211) des Vorsprungs (21) hergestellt sind, wobei das Dichtungsstück (6) in die Druckentlastungsnuten (212) eingelegt ist, um eine vollständige Abdichtung zu erzeugen, wenn das Dichtungsstück (6) auf die Oberseite (211) des Vorsprungs (21) in abdichtender Weise passt.

14. Zweiwege-Druckentlastungsventil nach Anspruch 1, **dadurch gekennzeichnet, dass** zwischen dem inneren Umfang des unteren Teils (52) des Dichtungselements (5) und dem äußeren Umfang des unteren Teils des Kartuschenkörpers (3) ein Luftspalt (X) vorgesehen ist.

15. Zweiwege-Druckentlastungsventil nach Anspruch 4, **dadurch gekennzeichnet, dass** ein Dichtungsrohr (8') aus flexiblem Material in dem Vorsprung (21) eingesetzt und an dem Außenumfang des Druckentlastungsdurchlasses (111) angeordnet ist, wobei die Oberseite des Dichtungsrohrs (8') zu einem höheren Niveau als die obere Oberfläche des Vorsprungs (21) vorsteht, und eine Druckentlastungsnut(en) (35') in der Bodenfläche des Kartuschenkörpers (3) vorgesehen ist/sind, um den Ventilhohlraum (2) und den Druckentlastungsdurchlass (111) zu verbinden.

## Revendications

1. Soupape de sécurité à deux voies, comprenant un corps de soupape (1) présentant une cavité de soupape (2) dedans et un ensemble de cartouche de soupape disposé dans la cavité de soupape (2) ;
dans laquelle le corps de soupape (1) est prévu sur son dessus avec un passage d'entrée d'eau (121) communiquant avec la cavité de soupape (2), et sur son fond avec un passage de détente (111) communiquant avec la cavité de soupape (2) alors qu'un passage de sortie d'eau (112) communiquant avec la cavité de soupape (2) est prévu latéralement dans le corps de soupape (1) ;
dans laquelle
l'ensemble de cartouche de sécurité comprend un corps de cartouche (3) et un élément étanche (5) réalisé en matériau flexible ;
le corps de cartouche (3) présente une chambre de pression (31) qui est ouverte vers le haut, dans lequel le corps de cartouche (3) peut coulisser vers le haut et le bas dans la cavité de soupape (2) par rapport au corps de soupape (1), un déplacement vers le bas du corps de cartouche (3) lui permet de s'ajuster à une extrémité d'entrée du passage de détente (111) de manière étanche de sorte à bloquer le passage de détente (111), un moyen de restauration qui amène le corps de cartouche (3) à maintenir une tendance d'un déplacement vers le haut pour laisser l'extrémité d'entrée du passage de détente (111), est prévu entre le corps de cartouche (3) et le corps de soupape (1),
**caractérisée en ce que** le/les trou(s) latéral/aux (32) pour la communication avec la chambre de pression (31) et la cavité de soupape (2) est/sont prévu(s) dans la paroi circonférentielle du corps de cartouche (3) ;
l'élément étanche (5) est agencé entre les parois circonférentielles du corps de cartouche (3) et de la cavité de soupape (2), dans laquelle la périphérie extérieure de la partie supérieure (51) de l'élément étanche (5) est en contact avec la paroi circonférentielle de la cavité de soupape (2) de sorte à produire un joint d'étanchéité, et la partie inférieure (52) de l'élément étanche (5) couvre le/les trou(s) latéral/aux (32) ;
et de plus, un espace (S), disponible pour que la partie inférieure (52) de l'élément étanche (5) se développe et se déforme radialement vers l'extérieur, est présent entre la périphérie extérieure de la partie inférieure (52) de l'élément étanche (5) et la paroi circonférentielle extérieure de la cavité de soupape (2).

2. Soupape de sécurité à deux voies selon la revendication 1, **caractérisée en ce que** le moyen de restauration est réalisé en tant que ressort (4) ou caoutchouc élastique, dont les deux extrémités sont supportées respectivement entre la paroi extérieure du corps de cartouche (3) et la paroi intérieure du corps de soupape (1).

3. Soupape de sécurité à deux voies selon la revendication 1, **caractérisée en ce que** le corps de soupape (1) est composé d'un siège de soupape (11) et d'un bouchon de soupape (12) ;
le siège de soupape (11) présente un espace de réception (113) qui est ouverte vers le haut, et le bouchon de soupape (12) est inséré dans la portion supérieure de l'espace de réception (113), dans laquelle la périphérie extérieure du fond du bouchon de soupape (12) est adaptée pour s'ajuster à la paroi intérieure de la portion supérieure du siège de soupape (11) de manière étanche, et la paroi intérieure du siège de soupape (11) située sous le bouchon de soupape (12) forme par conséquent la paroi circonférentielle de la cavité de soupape (2) ;
l'élément étanche (5) est situé sous le bouchon de valve (12) et entre le corps de cartouche (3) et le siège de soupape (11) ;
le passage d'entrée d'eau (121) est disposé dans le bouchon de soupape (12) alors que le passage de détente (111) et le passage de sortie d'eau (112) sont disposés dans le siège de soupape (11).

4. Soupape de sécurité à deux voies selon la revendication 1, **caractérisée en ce que** le corps de soupape (1) est composé d'un siège de soupape (11) et d'un bouchon de soupape (12) ;
le siège de soupape (11) présente un espace de réception (113) qui est ouverte vers le haut, le bouchon de soupape (12) est disposé sur la portion supérieure de l'espace de réception (113), et le bouchon de soupape (12) présente une extension (123) faisant saillie dans la portion médiane de l'espace de réception (113), dans laquelle l'extension (123) est adaptée pour s'ajuster à la paroi intérieure de la portion supérieure du siège de soupape (11) de manière étanche, et la paroi latérale intérieure de l'extension (123) conjointement avec la paroi intérieure de la portion inférieure du siège de soupape (11) forme par conséquent la paroi circonférentielle de la cavité de soupape (2) ;
l'élément étanche (5) est agencé entre le corps de cartouche (3) et l'extension (123) du bouchon de soupape (12), dans laquelle la périphérie extérieure de la partie supérieure (51) de l'élément étanche (5) bute contre l'extension (123) du bouchon de soupape (12) de sorte à produire un joint d'étanchéité ;
le passage d'entrée d'eau (121) est disposé dans le bouchon de soupape (12) alors que le passage de détente (111) et le passage de sortie d'eau (112) sont disposés dans le siège de soupape (11).

5. Soupape de sécurité à deux voies selon la revendication 1, **caractérisée en ce que** la partie médiane de l'élément étanche (5) est fixement raccordée au corps de cartouche (3) de sorte qu'elle puisse coulisser vers le haut et le bas conjointement avec le corps de cartouche (3) par rapport au corps de soupape (1).

6. Soupape de sécurité à deux voies selon la revendication 5, **caractérisée en ce qu'**un évidement de réception annulaire (34) est prévu sur la périphérie dans le corps de cartouche (3) sur la partie médiane, et l'élément étanche (5) présente une nervure faisant saillie vers l'intérieur radialement (53) prévue dans la paroi circonférentielle intérieure sur la partie médiane, dans laquelle la nervure (53) est insérée dans l'évidement de réception (34).

7. Soupape de sécurité à deux voies selon la revendication 1, **caractérisée en ce que** l'élément étanche (5') est disposé entre le corps de cartouche (3) et le corps de soupape (1) et est fixé par rapport au corps de soupape (1), dans lequel la périphérie extérieure de la partie supérieure (51') de l'élément étanche (5') est en contact avec la paroi intérieure du corps de soupape (1) de sorte à produire un joint d'étanchéité, et la partie inférieure de l'élément étanche (5') présente une paroi annulaire s'étendant vers le bas (52') ;
et la paroi annulaire (52') de l'élément étanche (5') est agencée autour du corps de cartouche (3) de l'extérieur, le(s) trou(s) latéral/aux (32) étant couvert(s) par la paroi annulaire (52') de l'élément étanche (5').

8. Soupape de sécurité à deux voies selon la revendication 7, **caractérisée en ce que** le corps de soupape (1) est composé d'un siège de soupape (11) et d'un bouchon de soupape (12) ;
le siège de soupape (11) présente un espace de réception (113) qui est ouverte vers le haut, et le bouchon de soupape (12) est inséré dans la portion supérieure de l'espace de réception (113) ;
le passage d'entrée d'eau (121) est disposé dans le bouchon de soupape (12) alors que le passage de détente (111) et le passage de sortie d'eau (112) sont disposés dans le siège de soupape (11).

9. Soupape de sécurité à deux voies selon la revendication 8, **caractérisée en ce que** le siège de soupape (11) présente un épaulement intérieur (115') sur sa paroi intérieure, dans laquelle la partie supérieure (51') de l'élément étanche (5') est repressée entre le fond du bouchon de soupape (12) et l'épaulement intérieur (115') de sorte que l'élément étanche (5') et le corps de soupape (11) soient fixés l'un par rapport à l'autre.

10. Soupape de sécurité à deux voies selon l'une quelconque des revendications 3 ou 4 ou 8, **caractérisée en ce que** le bouchon de soupape (12) présente des fiches faisant saillie latéralement (122) agencées diamétralement sur la périphérie extérieure, et le siège de soupape (11) présente des fentes (114) agencées dans la paroi latérale sur la portion supérieure de l'espace de réception (113) pour l'insertion des fiches (122).

11. Soupape de sécurité à deux voies selon la revendication 2, **caractérisée en ce qu'**un joint étanche (6) réalisé en matériau flexible est prévu sur le fond du corps de cartouche (3), dans laquelle le joint étanche (6) peut s'ajuster à une face d'extrémité sur l'entrée du passage de détente (111) de manière étanche.

12. Soupape de sécurité à deux voies selon la revendication 11, **caractérisée en ce que** la cavité de soupape (2) présente une projection faisant saillie vers le haut (21) sur sa surface inférieure, et le corps de cartouche (3) présente un épaulement de butée annulaire (33) sur sa périphérie extérieure, dans laquelle le ressort (4) est disposé de sorte à être glissé sur la projection (21), l'extrémité inférieure du ressort (4) butant contre la surface inférieure de la cavité de soupape (2) et l'extrémité supérieure du ressort (4) butant contre l'épaulement de butée annulaire (33), et dans laquelle le passage de détente (111) s'étend vers le haut au travers de la projection (21), et la face d'extrémité sur l'entrée du passage de détente (111) est réalisée en tant que surface supérieure (211) de la projection (21).

13. Soupape de sécurité à deux voies selon la revendication 12, **caractérisée en ce qu'**une pluralité de rainures de détente (212), pour la communication de la cavité de soupape (2) et le passage de détente (111), est fabriquée dans la surface supérieure (211) de la projection (21), dans laquelle le gâteau étanche (6) est incrusté dans les rainures de détente (212) pour produire un joint d'étanchéité complet lorsque le gâteau étanche (6) s'ajuste à la surface supérieure (211) de la projection (21) de manière étanche.

14. Soupape de sécurité à deux voies selon la revendication 1, **caractérisée en ce qu'**un espace (X) pour l'air circulant est présente entre la périphérie intérieure de la partie inférieure (52) de l'élément étanche (5) et la périphérie extérieure de la partie inférieure du corps de cartouche (3).

15. Soupape de sécurité à deux voies selon la revendication 4, **caractérisée en ce qu'**un tube étanche (8') réalisé en matériau flexible est inséré dans la projection (21) et situé sur la périphérie extérieure du passage de détente (111), dans laquelle le dessus du tube étanche (8') fait saillie à un niveau supérieur à la surface supérieure de la projection (21), et la/les rainure(s) de détente (35'), pour la communication de la cavité de soupape (2) et le passage de détente (111), est/sont prévue(s) dans la surface inférieure du corps de cartouche (3).
